# EUROPÄISCHE PATENTSCHRIFT

(11) **EP 1 117 473 B1**
(45) Veröffentlichungstag und Bekanntmachung des Hinweises auf die Patenterteilung: **04.06.2003**
(21) Anmeldenummer: 99952428.3
(22) Anmeldetag: 17.08.1999
(51) Int. Cl.: B01D 53/26, B01D 53/22

(54) **SPÜLLUFT-REGLER FÜR EINE TROCKENVORRICHTUNG FÜR DRUCKLUFT**
SCAVENGE AIR-REGULATOR FOR A DEVICE FOR DRYING COMPRESSED AIR
REGULATEUR D'AIR DE RIN AGE POUR UN DISPOSITIF DE SECHAGE D'AIR COMPRIME

(30) Priorität: 28.08.1998 DE 19839057
(43) Veröffentlichungstag der Anmeldung: 25.07.2001
(73) Patentinhaber: Koch, Berthold, 41468 Neuss (DE)
(72) Erfinder: SCHLENSKER, Herbert, D-51482 Leverkusen (DE); KUHN, Hans-Peter, D-41470 Neuss (DE)
(74) Vertreter: Bauer, Wulf, Dr.
(86) Internationale Anmeldenummer: DE9902576
(87) Internationale Veröffentlichungsnummer: WO00012198

(56) Entgegenhaltungen:
- US-A- 5 160 514
- US-A- 5 411 662
- PATENT ABSTRACTS OF JAPAN vol. 1997, no. 07, 31. Juli 1997 (1997-07-31) & JP 09 057043 A (KURODA PRECISION IND LTD), 4. März 1997 (1997-03-04)

## Beschreibung

Die Erfindung bezieht sich auf eine Anordnung bestehend aus einem Spülluft-Regler und einer Trockenvorrichtung für Druckluft.

Aus der US-Patentschrift 5,160,514 ist eine derartige Anordnung bekannt. Ein Spülluft-Regler ist in eine Trockenvorrichtung für Druckluft integriert. Hierzu ist der Druckluftausgang der Trockenvorrichtung mit einer Kammer in Verbindung, die durch eine Membran begrenzt ist. Auf der anderen Seite der Membran befindet sich eine weitere Kammer, die über eine Leitung mit dem Drucklufteingang der Trockenvorrichtung verbunden ist. Die Membran nimmt eine Stellung abhängig von der Druckdifferenz zwischen Drucklufteingang und Druckluftausgang ein. Die Membran ist mit einem Ventilelement verbunden, das einen seitlichen Schlitz hat und in einer zugehörigen Innenbohrung des Gehäuses geführt ist. Je nach Stellung der Membran nimmt das Ventilelement eine Position ein, die ein mehr oder weniger starkes Strömen von Druckluft des Druckluftausgangs der Trockenvorrichtung hin zum Eingang der Spülleitung ermöglicht.

Diese Anordnung, insbesondere ihr Spülluft-Regler arbeitet nicht zufriedenstellend. Insbesondere bei kleinen Druckdifferenzen zwischen dem Eingangsdruck und dem Ausgangsdruck für Druckluft der Trockenvorrichtung ist das Regelverhalten ungenügend. Weiterhin ist bei großen Druckdifferenzen zwischen Eingangsdruck und Ausgangsdruck der Druckluft der Trockenvorrichtung ein Problem dadurch gegeben, dass die Luft des Druckluftausgangs sowohl den Druck aufbringen muß, als auch strömt. Dies führt zu nicht eindeutigen Verhältnissen.

Hiervon ausgehend hat sich die Erfindung die Aufgabe gestellt, eine Anordnung aus einem Spülluft-Regler und einer Trockenvorrichtung so weiterzubilden, dass das Ventilelement sowohl kleinsten Druckdifferenzen zwischen dem Eingangsdruck und dem Ausgangsdruck der Druckluft der Trockenvorrichtung folgen kann und andererseits auch bei höheren Flüssen an Spülluft eine präzise Regelung vorliegt.

Ausgehend von der Anordnung nach dem genannten US-Patent wird diese Aufgabe gelöst durch eine Anordnung bestehend aus einem Spülluft-Regler und einer Trockenvorrichtung für Druckluft mit den Merkmalen des Patentanspruchs 1.

Bei diesem Spülluft-Regler ist die zu regelnde Luft, also die Spülluft, sauber getrennt von der Druckluft für den Antrieb des Ventilelementes. Das Regelverhalten des Ventilelementes wird nicht durch den Spülluftdruck beeinflußt. Weiterhin führt der Spülluftdruck aufgrund der drehsymmetrischen Ausbildung des Ventilbereichs nicht dazu, dass das Ventilelement radial gegen seine Gleit- und Lagerflächen gedrückt und dadurch seine Bewegung mechanisch beeinflußt wird. Das Regelverhalten ist nicht strömungsdruckabhängig. Der Spülluftdruck und auch der Spülluftstrom haben auf die Position des Ventilelementes keinen Einfluß. Die Position des Ventilelementes wird nur durch den Eingangsdruck und den Ausgangsdruck der Druckluft der Trockenvorrichtung bestimmt. Da sowohl der Eingangsdruck als auch der Ausgangsdruck auf möglichst flächengleiche und in der bevorzugten Ausbildung tatsächlich flächengleiche, in Gegenrichtung zueinander druckbeaufschlagte Antriebsflächen wirken, bewirkt eine Druckdifferenz von null zwischen Eingangsdruck und Ausgangsdruck keine Stellkraft auf das Ventilelement.

Insgesamt hat der Spülluft-Regler nach der Erfindung deutlich verbesserte Regeleigenschaften gegenüber dem vorbekannten Spülluft-Regler. In einer bevorzugten Ausführung ist er separat von der Trockenvorrichtung ausgebildet, er kann damit mehrere Trockenvorrichtungen bedienen oder es kann eine Spülluft geregelt werden, die nicht unmittelbar vom Druckluftausgang der Trockenvorrichtung kommt, sondern beispielsweise unter Zwischenschaltung eines Verbrauchers von der Ausgangsseite dieses Verbrauchers abgenommen wird. Eine derartige Möglichkeit gibt es bei dem vorbekannten Spülluft-Regler nicht.
In einer bevorzugten Ausbildung ist das gesamte Ventilelement rotationssymmetrisch. Weiterhin kann in einer bevorzugten Ausführung eine Feder vorgesehen sein, die sich zwischen dem Gehäuse und dem Ventilelement befindet und dieses in eine Richtung der Verschiebestrecke vorbelastet. Dieser Feder ist vorzugsweise eine Einstellvorrichtung zugeordnet. Je nach Einstellung der Feder wird insbesondere der Anfangsbereich der Bewegung des Ventilelementes auch durch die Feder mitbestimmt, dadurch erhält man eine besondere, gewünschte Regelcharakteristik. Die Feder legt im wesentlichen den Anfangspunkt vor, von dem der Regler bei Druckdifferenz null ausgeht.

In besonders einfacher Ausbildung ist der Steuerbereich so ausgebildet, dass er sich ausgehend vom Schliessbereich stetig verjüngt, insbesondere durch einen Drehkörper gebildet wird. Dies ermöglicht eine einfache Herstellung. Grundsätzlich kann der Steuerbereich aber auch durch Kanäle im Ventilkörper ausgebildet sein. Entscheidend ist immer, dass Drehsymmetrie vorliegt, so dass die Belastung durch Druckluft, die allseitig erfolgt, nicht zu irgendeiner radial gerichteten Kraft auf das Ventilelement führen kann. Dadurch werden die Bewegungen des Ventilkörpers relativ zum Gehäuse nicht von radialen Lagerkräften belastet oder mitbestimmt.

Grundsätzlich ist der Ventilkörper im Gehäuse so leichtgängig wie möglich gelagert. Die Lagerungen sind bewußt nicht möglichst dicht ausgebildet, insbesondere wird auf Gleitdichtungen verzichtet. Dieser Verzicht führt dazu, dass das Ventilelement schon mit viel kleineren Druckdifferenzen zwischen Eingangsdruck und Ausgangsdruck der Druckluft anspricht. Man nimmt dabei bewußt eine gewisse Leckrate entlang der Gleitflächen in Kauf. Vorrangiges Ziel ist nicht eine absolute Dichtheit zwischen den Bereichen, wo getrocknete Druckluft vorliegt, untereinander, sondern vorrangiges Ziel ist eine möglichst geringe Gleitreibung zwischen Ventilelement und Gehäuse. Demgemäß wird der Raum für die noch feuchte primäre Druckluft, die den Eingangsdruck hat, in bevorzugter Ausbildung durch eine Membran von den übrigen Teilen des Gehäuses und insbesondere vom Ventilelement separiert. Dadurch wird erreicht, dass trotz der nicht absoluten Abdichtung zwischen den einzelnen Räumen und Kammern entlang des Ventilelements sichergestellt ist, das auf keinen Fall feuchte Druckluft über Undichtigkeiten zu Stellen gelangen kann, wo nur trockene Druckluft vorliegt. Die Membran kann als kreisförmige oder scheibenförmige Membran ausgeführt sein, sie kann aber auch eine Rollmembran sein.

Eine nicht vollständige Abdichtung ist allerdings bei Kleinreglern problematisch, weil die Leckströme bei diesen beachtlich sind im Vergleich zum geregelten Spülluftstrom. Bei Kleinreglern wird deshalb bevorzugt eine Gleitdichtung oder dergleichen eingesetzt. Kleinregler liegen vor bei einem Spülluftvolumenstrom unter 350 l/min.

Der Spülluft-Regler ist vorzugsweise so ausgebildet, dass der Schliessbereich mit der zugehörigen Innenbohrung nicht irgendwie einen Anschlag hat, sondern das Ventilelement im wesentlichen frei schwimmend im Gehäuse angeordnet ist. Dadurch kann es sich schon bei kleinsten Druckdifferenzen zwischen Eingangsdruck und Ausgangsdruck bewegen. Durch die möglichst geringe Reibung, die zwischen dem Ventilelement und dem Gehäuse vorhanden ist, wird dies noch unterstützt.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- FIG. 1:: eine schnittbildliche Darstellung eines Spülluft-Reglers,
- FIG. 2:: eine vergrösserte Darstellung des Details X in Fig. 1,
- FIG. 3:: eine schnittbildliche Darstellung entsprechend Fig. 2 einer anderen Auführung des Steuerbereichs,
- FIG. 4:: eine schnittbildliche Darstellung entsprechend Fig. 2 einer anderen Auführung des Steuerbereichs,
- FIG. 5:: eine Zusammenschaltung von einer und gestrichelt dargestellt zwei weiteren, parallel geschalteten Trockenvorrichtungen mit einem Spülluft-Regler nach der Erfindung,
- FIG. 6:: eine schnittbildliche Darstellung ähnlich Figur 1 eines anderen Ausführungsbeispiels eines Spülluft-Reglers,
- FIG. 7:: eine schnittbildliche Darstellung ähnlich Figur 1 eines Kleinreglers,
- FIG. 8:: eine vergrößerte Darstellung des Details Y in Figur 7 und
- FIG. 9:: eine vergrößerte Darstellung des Details Y in Figur 7 einer anderen Ausführung als in Figur 8.

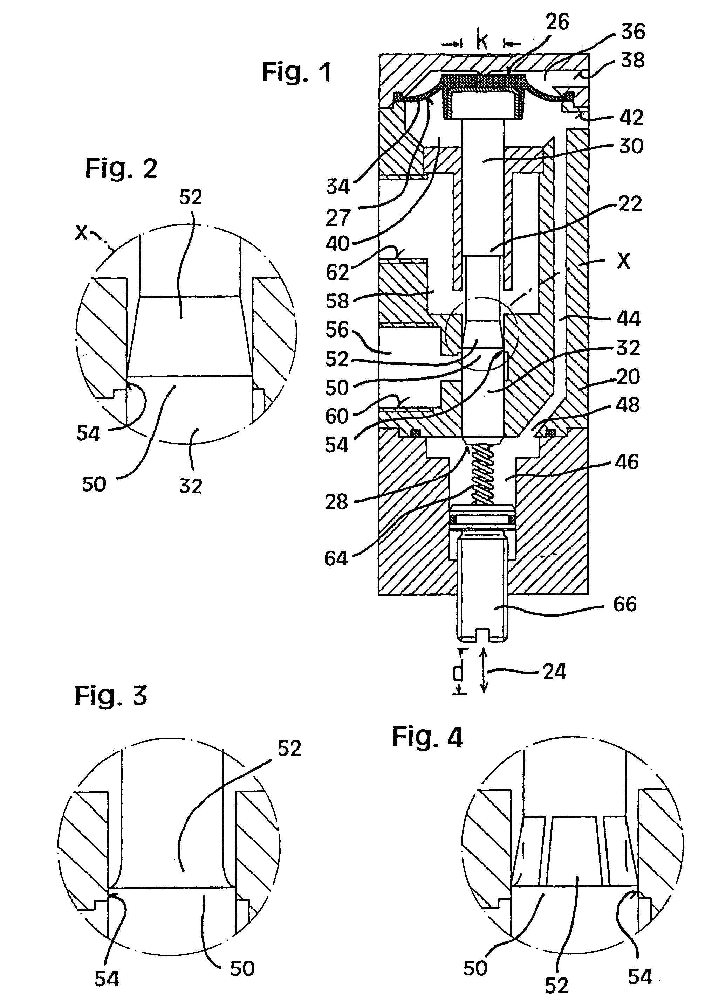

Der Spülluft-Regler hat ein mehrteiliges, im wesentlichen zylindrisches Gehäuse 20 und ein in diesem leicht verschiebbar gelagertes und geführtes Ventilelement 22. Letzteres ist drehsymmetrisch. Das Ventilelement kann in Richtung des Doppelpfeils 24 entlang einer Verschiebestrecke, auf die noch eingegangen wird, hin- und herbewegt werden. Dargestellt ist es in Figur 1 in einer Einstellung seiner Verschiebestrecke, nämlich der oberen Endposition.

Das Ventilelement hat eine erste, in Figur 1 obere Antriebsfläche 26 in Form einer Kreisfläche, deren Durchmesser durch den Kerndurchmesser des Ventilelements bestimmt ist, und der Membran. Es hat weiterhin eine zweite, untere und in Gegenrichtung zur ersten Antriebsfläche 26 freie Antriebsfläche 28, die flächengleich ist mit der ersten Antriebsfläche 26. Denn auch sie ist eine Membranfläche und eine Kreisfläche mit dem Kerndurchmesser des Ventilelements. Das Ventilelement hat seinen Kerndurchmesser in den Bereichen 30 und 32. In diesen beiden Bereichen ist es auch mit möglichst geringer Reibung in Teilen des Gehäuses 20 geführt. Schwergewicht liegt bei der Konstruktion dabei darauf, dass das Ventilelement 22 möglichst leicht, also mit geringster Kraft, bewegbar ist, das also die Gleitreibung möglichst gering ist. Die Abdichtung ist wichtig, aber nicht vorrangig, es darf und kann eine gewisse Leckage im Bereich der Gleitlagerungen vorliegen.

Die erste, obere Antriebsfläche 26 wird im Ausführungsbeispiel nach Figur 1 durch eine freie Außenfläche einer Membran 34 gebildet, die fest mit dem oberen Ende des Ventilelements 22 verbunden ist. Mit ihren restlichen Bereichen sowie mit Innenwandbereichen des Gehäuses 20 begrenzt sie einen ersten Raum 36, der an einem ersten Anschluß 38 zugänglich ist. Dieser Raum ist für noch feuchte Druckluft unter Eingangsdruck bestimmt, der Anschluß 38 wird also mit dem Drucklufteingang der Trockenvorrichtung über eine hier nicht dargestellte Leitung verbunden. Auf der anderen Seite der Membran herrscht der Ausgangsdruck der Druckluft der Trockenvorrichtung. Dort ist ein Teilraum 40 ausgebildet, der über einen zweiten Anschluß 42 zugänglich ist und zusammen mit einer Passage 44 und einem zweiten Teilraum 46 den zweiten Raum 48 bildet. In ihm herrscht der Ausgangsdruck der Druckluft der Trockenvorrichtung. Diese Luft ist bereits getrocknet.

Zwischen den beiden Bereichen 30 und 32 befindet sich ein Ventilbereich des Ventilelements 22, der Ventilbereich setzt sich zusammen aus einem Schliessbereich 50 und einem Steuerbereich 52. Dem Schliessbereich ist eine Innenbohrung 54 des Gehäuses zugeordnet. Eine absolute Dichtheit zwischen Schliessbereich und Innenbohrung 54 ist nicht notwendig, aber weitgehend möglich. Eine passgenaue Ausbildung von Schliessbereich und Innenbohrung ermöglicht es zwar, die Zufuhr von Spülluft zu einer Trockenvorrichtung abzuschalten, ein derartiges Abschalten ist aber nicht unbedingt nötig, denn bei einem Nichtbetrieb einer kompletten Trockenvorrichtung für Druckluft kann die Spülluftzufuhr auch anderweitig gesperrt werden, z. B. kann die Primärluft abgeschaltet werden, so dass sich das Abschalten der Spülluft durch den Schliessbereich erübrigt.

In der Ausführung nach den Figuren 1 und 2 ist der Schliessbereich 50 zylindrisch, der Steuerbereich 52 hat Kegelstumpfform. In den Figuren 3 und 4 sind andere Ausführungen des Steuerbereichs dargestellt. Nach Figur 3 ist der Steuerbereich wie zuvor ein Drehteil, es hat aber nun einen anderen Verlauf, beispielsweise einen parabelförmigen Verlauf. Dadurch wird ein anderes Regelverhalten erzielt. In der Ausführung nach Figur 4 schliesslich ist der Steuerbereich 52 zwar wiederum ein Drehteil in Kegelstumpfform, zusätzlich sind aber noch sechs radiale Schlitze gleichverteilt eingearbeitet, die relativ schmal sind, z. B. 1/20 des Kerndurchmessers k breit sind und die auf ihrem Boden einen Verlauf haben, wie er bei Figur 3 vorliegt.

Je nach axialer Stellung des Ventilelements 22 relativ zum Gehäuse 20 kann mehr oder weniger Luft zwischen der Innenbohrung 54 und dem Ventilbereich hindurchtreten. Auf diese Weise erfolgt die eigentliche Regelung. Als Verschiebestrecke d wird der Weg des Schwerpunktes des Ventilelements zwischen seinen Endlagen bezeichnet.

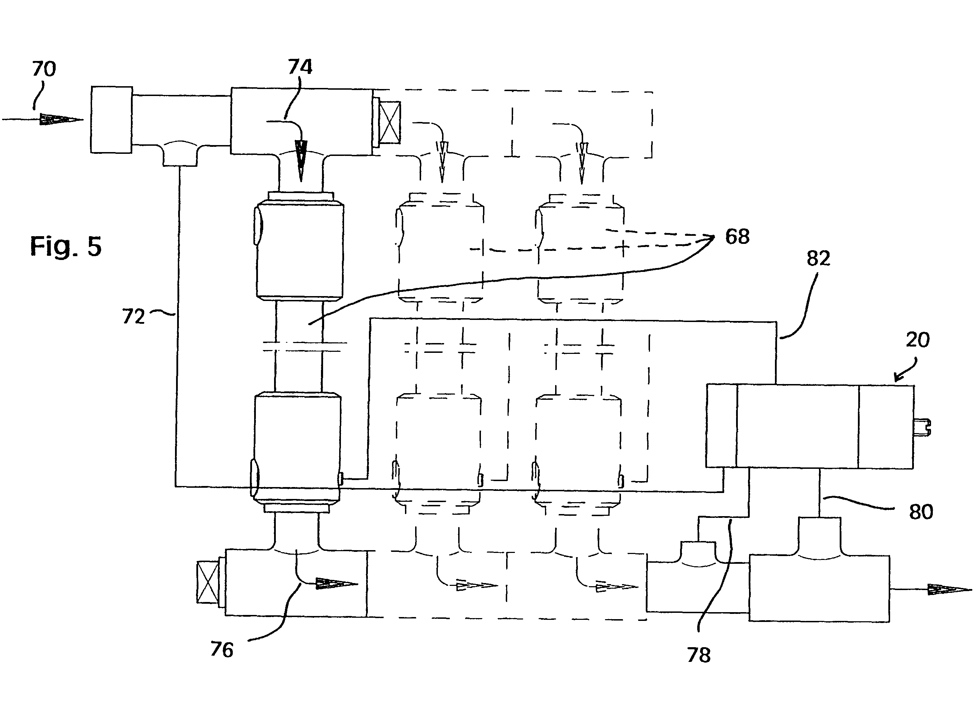

Im Gehäuse sind axial versetzt nebeneinander zwei Ringkammern 56, 58 ausgebildet. Beide Ringkammern 56, 58 haben jeweils einen eigenen Anschluß 60, 62. Die beiden Anschlüsse werden mit einem ersten Teilstück und mit einem zweiten Teilstück einer Leitung für die Zuführung von Spülluft zur Trockenvorrichtung verbunden (siehe Fig. 5). Anders ausgedrückt ist die Strecke zwischen den beiden Anschlüssen 60, 62 Bestandteil der Zuführleitung für Spülluft der Trockenvorrichtung. Die beiden Ringkammern 56, 58 sind über den ringförmigen, rotationssymetrischen Spalt zwischen Ventilbereich und Innenbohrung 54 miteinander in Verbindung, eine sonstige Verbindung liegt nicht vor.

In Figur 1 ist noch eine Feder 64 vorgesehen, sie wirkt zwischen dem Gehäuse 20 und der unteren Stirnfläche des Ventilelements 22. Sie ist über eine Einstellvorrichtung 66 einstellbar. Die Feder 64 bestimmt die Ruheposition des Ventilelements 22. Sie bestimmt weiterhin zusammen mit der Druckdifferenz zwischen Eingangsdruck und Ausgangsdruck zumindest auf einen Teil der Verschiebestrecke die Position des Ventilelements 22.

Im Betrieb ist es vorteilhaft, das Ventilelement 22 senkrecht auszurichten. Bei einer anderen Lagerung würde das Gewicht des Ventilelementes 22 zu einer einseitigen Auflage in den Führungsbereichen führen. Die Feder 64 kann so bemessen sein, dass sie das Gewicht des Ventilelements 22 bei senkrechter Anordnung aufhebt.

Figur 5 zeigt eine komplette Vorrichtung eines Spülluft-Reglers mit einer ersten, mit vollen Strichen dargestellten Trockenvorrichtung und zwei weiteren, gestrichelt dargestellten Trockenvorrichtungen, die alle parallel geschaltet sind.

Primäre, feuchte Druckluft strömt entlang eines Pfeils 70 durch ein T-Stück in die einzelnen Trockenvorrichtungen 68 ein. Die Luftströmung ist jeweils durch einen Pfeil am Eintritt der Trockenvorrichtungen 68 angedeutet. Am T-Stück wird mittels einer Leitung 72 primäre Druckluft erfasst und dem Gehäuse 20 zugeleitet, die Leitung 72 ist mit dem ersten Raum 36 verbunden.

Am Ausgang der Trockenvorrichtungen 68 liegt getrocknete Druckluft vor, sie strömt in Richtung der Pfeile 74. Sie kann an einem Auslass 76, siehe dort wiederum Pfeil,
einem hier nicht dargestellten Verbraucher zugeleitet werden. Sie durchströmt zunächst zwei T-Stücke, von denen das erste über eine Leitung 78 mit dem zweiten Raum 48 verbunden ist. Das zweite T-Stück ist über eine Leitung 80 mit der ersten Ringkammer 56 verbunden, die erste Ringkammer 56 ist dadurch definiert, dass ihr der Schliessbereich 50 des Ventilbereichs zugewandt ist. Von der zweiten Ringkammer 58, der der Steuerbereich 52 des Ventilbereichs zugewandt ist, führt eine Leitung 82 zum Eingang für Spülluft der Trockenvorrichtungen 68. Die Leitungen 80, 82 bilden gemeinsam mit dem entsprechenden Teilstück des Spülluft-Reglers die Zufuhrleitung für Spülluft der Trockenvorrichtungen 68.

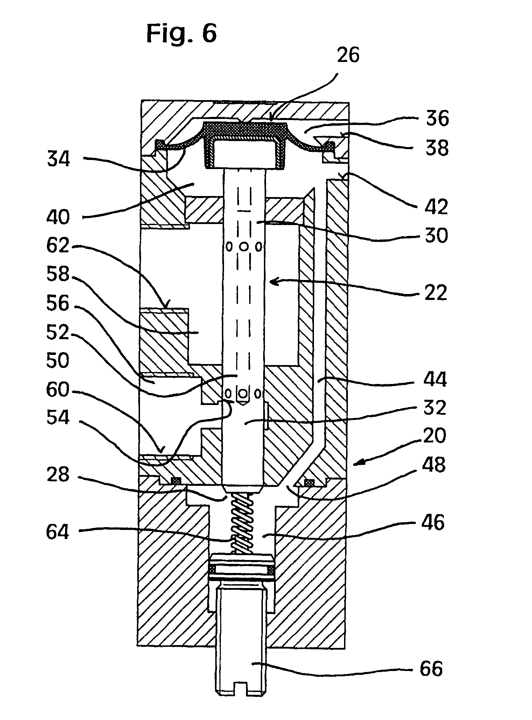

In der Ausführung nach Figur 6 ist gegenüber Figur 1 der Ventilbereich geändert. Es liegt nach wie vor ein Schliessbereich 50 vor, der Steuerbereich 52 ist aber nun realisiert durch mehrere, über den Umfang gleich verteilte Verbindungskanäle. Hierzu ist in Nähe der ersten Ringkammer 56 eine Anzahl von radialen Bohrungen ausgeführt, die in eine axiale Sackbohrung münden. Axial versetzt hierzu ist eine gleiche Anzahl von Radialbohrungen ausgeführt, die der zweiten Ringkammer 58 zugeordnet sind. Je nach Stellung des Ventilelements 22 strömt mehr oder weniger Luft durch die Kanäle.

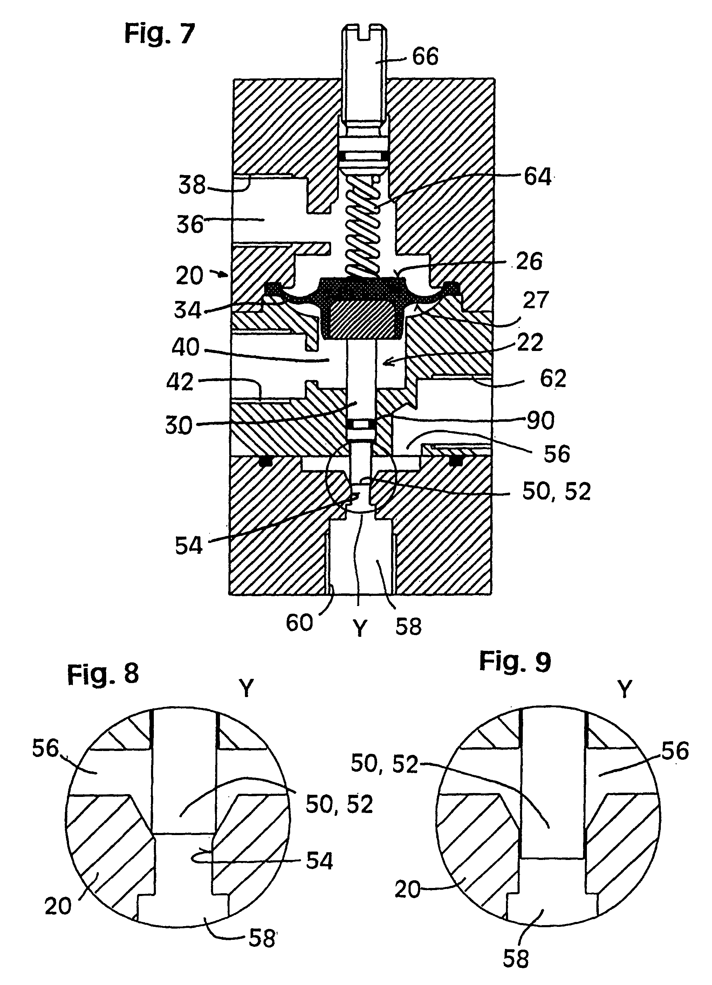

Die oben beschriebenen Ausführungsbeispiele eignen sich für normale und große Regler, beispielsweise mit einem Spülluftvolumenstrom von 150-3000, bevorzugt 300-2000 1/min. Für kleine Regler mit einem darunter liegenden Leistungsbereich, insbesondere 20-350 bevorzugt 50-300 l/min werden Änderungen vorgenommen, die im folgenden beschrieben sind, ungeänderte Merkmale werden nicht mehr im Einzelnen für die Ausführungen nach den Figuren 7-9 beschrieben.

Es sind einige Änderungen, die unabhängig von einander an den bisher besprochenen Ausführungsbeispielen angebracht werden können, um einen Kleinregler zu erhalten:
Erstens wird nun zwischen dem zweiten Bereich 32 des Ventilelements 22 und dem Gehäuse 20 eine Dichtung vorgesehen, konkret ein O-Ring 90. Durch diese Dichtung sind die erste Ringkammer 56 und die zweite Ringkammer 58 nunmehr voneinander separiert und werden Leckstörungen, wie sie bei den bisherigen Ausführungen auftreten können, vermieden. Anstelle eines O-Ring 90 können auch Rollmembranen, andere Membranen usw. eingesetzt werden.
Zweitens wird insbesondere um die Kosten eines Kleinreglers auch klein zu halten, darauf verzichtet, daß die durch das Ventilelement 22, insbesondere dessen radiale Flächen, und die Membran 34 bestimmten Antriebsflächen absolut gleich groß sind, in dem auf die Passage 44 verzichtet wird. Der erste Raum 36 ist ungeändert ausgeführt, der zweite Raum besteht aber nun nur noch aus dem bisherigen Teilraum 40.
Drittens hat der Ventilbereich 50, 52 in der Ausführung nach Figur 8 nunmehr einen definierten Sitz, er schlägt an die Wandung eines kegelförmigen Bereichs an. Hierzu endet das Ventilelement im Übergangsbereich zwischen den beiden Ringkammern 56, 58 zylindrisch.
Viertens wird in der Ausführung nach Figur 9 auf einen festen Anschlag verzichtet, vielmehr ist das freie Ende des Ventilelements 22 nunmehr in der am weitesten geschlossenen dargestellten Position in einer Zylinderbohrung, die sich unmittelbar an den kegelförmigen Bereich anschließt.

## Patentansprüche

1. Anordnung bestehend aus einem Spülluft-Regler und einer Trockenvorrichtung (68) für Druckluft, wobei der Spülluft-Regler ein Gehäuse (20) und ein in diesem geführtes und entlang einer Verschiebestrecke verschiebbares Ventilelement (22) aufweist, welches
a) zwei quer zur Verschiebestrecke verlaufende Antriebsflächen (26; 27,28) hat, die in Gegenrichtung zueinander weisen,
- von denen eine erste Antriebsfläche (26) zusammen mit den Gehäuseinnenwänden einen ersten Raum (36) für den Eingangsdruck der Druckluft der Trockenvorrichtung bildet und dieser Verbindungsmittel für den Anschluß an den Drucklufteingang der Trockenvorrichtung hat, und
- von denen die andere, zweite Antriebsfläche (27,28) zusammen mit Gehäuseinnenwänden einen zweiten Raum (48) für den Ausgangsdruck der Druckluft der Trockenvorrichtung bildet und dieser Verbindungsmittel für den Anschluß an den Druckluftausgang der Trockenvorrichtung hat,
b) und einen drehsymmetrisch ausgebildeten Ventilbereich (50, 52) hat, der ausgehend von einem Schliessbereich (50), der in einer zugehörigen Innenbohrung (54) des Gehäuses (20) geführt ist in einen Steuerbereich (52) übergeht, so dass ein drehsymmetrischer Durchlaßquerschnitt zwischen Innenbohrung (54) und Steuerbereich (52) vorliegt, dessen Größe von der Position des Ventilelements (22) entlang der Verschiebestrecke abhängt,
und wobei im Gehäuse (20) zwei Ringkammern (56, 58) axial versetzt nebeneinander ausgebildet sind, die räumlich dem Ventilbereich (50, 52) zugeordnet und die über den drehsymmetrischen Durchlaßquerschnitt zwischen Innenbohrung (54) und Steuerbereich (52) miteinander verbunden sind und von denen die eine Verbindungsmittel für den Anschluß an ein erstes Teilstück (80) der Zuführleitung für Spülluft der Trockenvorrichtung hat und die andere Verbindungsmittel für ein zweites Teilstück (80) dieser Zuführleitung hat.

2. Anordnung bestehend aus einem Spülluft-Regler und einer Trockenvorrichtung (68) für Druckluft nach Anspruch 1, **dadurch gekennzeichnet, dass** das Ventilelement (22) rotationssymmetrisch ist, insbesondere dass es ein Rotationskörper ist.

3. Anordnung bestehend aus einem Spülluft-Regler und einer Trockenvorrichtung (68) für Druckluft nach Anspruch 1, **dadurch gekennzeichnet, dass** eine Feder (64) vorgesehen ist, die sich zwischen dem Gehäuse (20) und dem Ventilelement (22) befindet und dieses in einer Richtung der Verschiebestrecke d vorbelastet.

4. Anordnung bestehend aus einem Spülluft-Regler und einer Trockenvorrichtung (68) für Druckluft nach Anspruch 3, **dadurch gekennzeichnet, dass** eine zweite Feder vorgesehen ist, die vorzugsweise entgegengesetzt wirkend zur ersten Feder (64) angeordnet ist.

5. Anordnung bestehend aus einem Spülluft-Regler und einer Trockenvorrichtung (68) für Druckluft nach Anspruch 1, **dadurch gekennzeichnet, dass** die Antriebsflächen (26; 27, 28) weitgehend flächengleich sind, vorzugsweise flächengleich sind.

6. Anordnung bestehend aus einem Spülluft-Regler und einer Trockenvorrichtung (68) für Druckluft nach Anspruch 1, **dadurch gekennzeichnet, dass** sich im Steuerbereich (52) der Durchmesser des Ventilbereichs (50, 52) stetig verjüngt, insbesondere dass der Steuerbereich

7. Anordnung bestehend aus einem Spülluft-Regler und einer Trocken-Vorrichtung (68) für Druckluft nach Anspruch 1, **dadurch gekennzeichnet, dass** eine Membran (34) mit dem Ventilelement (22) verbunden ist, dass die Membran (34) abgedichtet im Gehäuse (20) angeordnct ist und dass die vom Ventielement (22) abgewandte Seite der Membran (34) den Raum für den Eingangsdruck der Druckluft begrenzt.

8. Anordnung bestehend aus einem Spülluft-Regler und einer Trockenvorrichtung (68) für Druckluft nach Anspruch 1, **dadurch gekennzeichnet. dass** das Ventilelement (22) ohne Zwischenanordnung von Gleitdichtungen in paßgenauen Bohrungen des Gehäuses (20) geführt ist.

9. Anordnung bestehend aus einem Spülluft- Regler und einer Trockenvorrichtung (68) für Druckluft nach Anspruch 1, **dadurch gekennzeichnet, dass** die vier Anschlüsse des Gehäuses (20), nämlich der Anschluß (38) an den Drucklufteingang der Trockenvorrichtung (68). der Anschluß (42) an den Druckluftausgang der Trockenvorrichtung, der Anschluß (60) an die eine Ringkammer (56) und der Anschluß (62) an die andere Ringkammer (58), außerhalb des Spülluft-Reglers nicht unmittelbar miteinander verbunden sind, insbesondere dass der Anschluß an den Druckluftausgang der Trockenvorrichtung eine eigene, zum Druckluftausgang der Trockenvocrichtung führende Leitung (78) hat und dass ebenfalls eine der beiden Ringkammern (56, 58) über eine eigene Leitung (80) mit dem Druckluftausgang der Trockenvorrichtung verbunden ist.

10. Verwendung eines Spülluftreglers nach Anspruch 1 zur Steuerung des Spülluftstromes durch eine Trockenvorrichtung (68).

## Claims

1. Arrangement comprising a scavenging air regulator and a dehydration device (68) for compressed air, said scavenging air regulator having a housing (20) and a valve element (22) guided therein, said valve element being capable of sliding along a sliding path and having
a) two driving surfaces (26; 27, 28) which run crosswise to said sliding path and which point in opposite directions,
• of which driving surfaces a first driving surface (26) forms a first space (36) together with the inner walls of the housing for the intake pressure of the compressed air of the dehydration device, said first space (36) having connecting means for communication with the compressed air inlet of the dehydration device and
• the other, second driving surface (27, 28) forms a second space (48) with the inner walls of the housing for the exhaust pressure of the compressed air of the dehydration device, said second space (48) having connecting means for communicating with the compressed air outlet of the dehydration device,
b) and a valve area (50, 52) which exhibits rotational symmetry and, starting from a closing area (50) which is guided in a corresponding inner bore (54) in the housing, merges into a control area (52) so that, depending upon the position of the valve element (22) along the sliding path, the rotationally symmetrical opening between the inner bore (54) and the control area (52) is more or less large,
and wherein two toroidal chambers (56, 58) are disposed in an axially staggered arrangement one beside the other in the housing (20), said chambers being allocated to the valve area (50, 52) from a spatial point of view and communicating via the rotationally symmetrical opening between the inner bore (54) and the control area (52), one of said chambers being provided with connecting means for communicating with a first portion (80) of the feeding conduit of scavenging air of the dehydration device and the other chamber having connecting means for a second portion (80) for said feeding conduit.

2. Arrangement comprising a scavenging air regulator and a dehydration device (68) according to claim 1, **characterized in that** the valve element (22) exhibits rotational symmetry, more specifically that it is a body of revolution.

3. Arrangement comprising a scavenging air regulator and a dehydration device (68) according to claim 1, **characterized in that** a spring (64) is provided which is located between the housing (20) and the valve element (22) and which biases said valve element in one direction of the sliding path d.

4. Arrangement comprising a scavenging air regulator and a dehydration device (68) according to claim 3, **characterized in that** a second spring is provided that is arranged in such a way that it acts in opposition to the first spring (64).

5. Arrangement comprising a scavenging air regulator and a dehydration device (68) according to claim 1, **characterized in that** the driving surfaces (26; 27, 28) are largely equal in area, preferably equal in area.

6. Arrangement comprising a scavenging air regulator and a dehydration device (68) according to claim 1, **characterized in that** the diameter of the valve area (50, 52) continuously tapers off in the control area (52), more specifically that the control area (52) takes the form of a body of revolution.

7. Arrangement comprising a scavenging air regulator and a dehydration device (68) according to claim 1, **characterized in that** a membrane (34) is connected to the valve element (22), that the membrane is sealed and arranged inside the housing (20) and that the face of the membrane (34) that is averse to the valve element (22) restricts the space for the intake pressure of the compressed air.

8. Arrangement comprising a scavenging air regulator and a dehydration device (68) according to claim 1, **characterized in that** the valve element (22) is guided in snugly fitting bores of the housing (20) without interposition so sliding seals.

9. Arrangement comprising a scavenging air regulator and a dehydration device (68) according to claim 1, **characterized in that** the four connecting ports of the housing (20), viz., the connecting port (38) to the compressed air inlet of the dehydration device (68), the connecting port (42) to the compressed air outlet of the dehydration device, the connecting port (60) to the one toroidal chamber (56) and the connecting port (62) to the other toroidal chamber (58) are not communicating, more specifically that the connecting port to the compressed air outlet of the dehydration device is provided with a conduit of its own that leads to the compressed air outlet of the dehydration device and that one of the two toroidal chambers (56, 58) also communicates with the compressed air outlet of the dehydration device by way of a conduit of its own.

10. Use of a scavenging air regulator according to claim 1 for controlling the flow of scavenging air through a dehydration device (68).

## Revendications

1. Disposition se composant d'un régulateur d'air de balayage et d'un dispositif de séchage (68) pour air comprimé, le régulateur d'air de balayage présentant un boîtier (20) et un élément de soupape (22) guidé dans celui-ci et déplaçable le long d'un trajet de translation, ledit élément de soupape ayant
a) deux faces d'entraînement (26; 27, 28) qui s'étendent transversalement au trajet de translation et montrent dans des sens opposés,
- dont une première face d'entraînement (26) forme, conjointement avec les parois intérieures du boîtier, un premier espace (36) pour la pression d'entrée de l'air comprimé du dispositif de séchage, et ce premier espace présente des moyens de jonction pour le raccordement à l'entrée d'air comprimé du dispositif de séchage, et
- dont l'autre, deuxième face d'entraînement (27, 28) forme, conjointement avec les parois intérieures du boîtier, un deuxième espace (48) pour la pression de sortie de l'air comprimé du dispositif de séchage, et ce deuxième espace présente des moyens de jonction pour le raccordement à la sortie d'air comprimé du dispositif de séchage,
b) et une zone de soupape (50, 52) réalisée à symétrie de révolution qui, à partir dune zone de fermeture (50) qui est guidée dans un perçage intérieur (54) associé du boîtier (20), entre dans une zone de commande (52), de sorte qu'il y a une section de passage à symétrie de révolution entre le perçage intérieur (54) et la zone de commande (52), dont la dimension dépend de la position de l'élément de soupape (22) le long du trajet de translation,
et, dans le boîtier (20), deux chambres toroïdales (56, 58) étant réalisées Tune à côté de l'autre de manière à être axialement décalées, qui, quant à l'espace, sont associées à la zone de soupape (50, 52) et qui communiquent Tune avec l'autre par la section de passage à symétrie de révolution entre le perçage intérieur (54) et la zone de commande (52) et dont Tune présente des moyens de jonction pour le raccordement à un premier tronçon (80) de la conduite d'amenée d'air de balayage du dispositif de séchage et dont l'autre présente des moyens de jonction pour un deuxième tronçon (80) de cette conduite d'amenée.

2. Disposition se composant d'un régulateur d'air de balayage et d'un dispositif de séchage (68) pour air comprimé selon la revendication 1, **caractérisée par le fait que** l'élément de soupape (22) est réalisée à symétrie de révolution, en particulier qu'il est un corps de révolution.

3. Disposition se composant d'un régulateur d'air de balayage et d'un dispositif de séchage (68) pour air comprimé selon la revendication 1, **caractérisée par le fait que** l'on prévoit un ressort (64) qui se trouve entre le boîtier (20) et l'élément de soupape (22) et précontraint ce dernier dans une direction du trajet de translation d.

4. Disposition se composant d'un régulateur d'air de balayage et d'un dispositif de séchage (68) pour air comprimé selon la revendication 3, **caractérisée par le fait que** l'on prévoit un deuxième ressort qui, de préférence, est disposé de manière à agir dans le sens opposé au premier ressort (64).

5. Disposition se composant d'un régulateur d'air de balayage et d'un dispositif de séchage (68) pour air comprimé selon la revendication 1, **caractérisée par le fait que** les faces d'entraînement (26 ; 27, 28) sont dans une large mesure égales en surface, de préférence égales en surface.

6. Disposition se composant d'un régulateur d'air de balayage et d'un dispositif de séchage (68) pour air comprimé selon la revendication 1, **caractérisée par le fait que**, dans la zone de commande (52), le diamètre de la zone de soupape (50, 52) se rétrécit continûment, en particulier que la zone de commande (52) est formée par un corps de révolution.

7. Disposition se composant d'un régulateur d'air de balayage et d'un dispositif de séchage (68) pour air comprimé selon la revendication 1, **caractérisée par le fait qu'**une membrane (34) est reliée à l'élément de soupape (22), que la membrane (34) est disposée de manière étanchée dans le boîtier (20) et que le côté de la membrane (34), qui montre dans la direction opposée à l'élément de soupape (22) limite l'espace pour la pression d'entrée de l'air comprimé.

8. Disposition se composant d'un régulateur d'air de balayage et d'un dispositif de séchage (68) pour air comprimé selon la revendication 1, **caractérisée par le fait que** l'élément de soupape (22) est guidé dans des perçages exactement ajustés du boîtier (20) sans interposition de joints de glissement.

9. Disposition se composant d'un régulateur d'air de balayage et d'un dispositif de séchage (68) pour air comprimé selon la revendication 1, **caractérisée par le fait que** les quatre raccords du boîtier (20), à savoir le raccord (38) à l'entrée d'air comprimé du dispositif de séchage (68), le raccord (42) à la sortie d'air comprimé du dispositif de séchage, le raccord (60) à l'une (56) des chambres toroïdales et le raccord (62) à l'autre chambre toroïdale (58), ne communiquent pas directement l'un avec l'autre à l'extérie du régulateur d'air de balayage, en particulier que le raccord à la sortie d'air comprimé du dispositif de séchage présente une propre conduite (78) menant vers la sortie d'air comprimé du dispositif de séchage, et qu'une des deux chambres toroïdales (56, 58) communique elle aussi par une propre conduite (80) avec la sortie d'air comprimé du dispositif de séchage.

10. Utilisation d'un régulateur d'air de balayage selon la revendication 1 pour la commande du courant d'air de balayage à travers un dispositif de séchage (68).
